# EUROPEAN PATENT SPECIFICATION

(11) **EP 4 284 040 B1**
(45) Date of publication and mention of the grant of the patent: **27.05.2026**
(21) Application number: 22175542.4
(22) Date of filing: 25.05.2022
(51) Int. Cl.: H04W 8/20, H04W 8/18

(54) **PROVISION OF A PROFILE PACKAGE ON A PROFILE SERVER FOR DOWNLOAD TO AN EUICC**
BEREITSTELLUNG EINES PROFILPAKETS AUF EINEM PROFILSERVER ZUM HERUNTERLADEN AUF EINE EUICC
FOURNITURE D'UN PAQUET DE PROFILS SUR UN SERVEUR DE PROFILS POUR LE TÉLÉCHARGEMENT VERS UNE EUICC

(43) Date of publication of application: 29.11.2023
(73) Proprietor: Giesecke+Devrient Mobile Security Germany GmbH, 81677 München (DE)
(72) Inventor: Huber, Ulrich, 81475 München (DE); Domanska, Zofia, 22410-001 Rio de Janeiro (BR)
(74) Representative: Giesecke+Devrient IP

(56) References cited:
- US-A1- 2020 084 610
- US-A1- 2021 385 635
- GSMA: "GSM Association Non-confidential Official Document SGP.22 -SGP.22 RSP Technical Specification Security Classification: Non-confidential GSM Association Non-confidential Official Document SGP.22 -SGP.22 RSP Technical Specification", 5 June 2020 (2020-06-05), pages 1 - 268, XP055978359, Retrieved from the Internet <URL:https://www.gsma.com/esim/wp-content/uploads/2020/06/SGP.22-v2.2.2.pdf> [retrieved on 20221107]

## Description

### Field of the invention

The present invention relates to providing a profile package on a profile server, for download of the profile package from the profile server to an eUICC, and a profile download method.

### Background of the invention and prior art

Mobile devices host at least one eUICC comprising one or several profiles allowing the mobile device to authenticate itself versus a mobile network, so as to establish and run a communication session in the mobile network, for example a voice call or data transmission.

Document [1] [SGP.22 V2.2.2], GSMA SGP.22 - SGP.22 RSP Technical Specification, Version 2.2.2, 05 June 2020 (2020-06-05) from the prior art is concerned with the Remote SIM Provisioning, which is understood to be the downloading, installing, enabling, disabling, and deleting of a profile on an embedded universal integrated circuit card, eUICC.

For establishing and running the communication session in the mobile network under a particular profile, the profile comprises a set of identifiers, like IMSI and Ki. In addition to the identifiers, the profile contains OTA Keys (OTA = over-the-air), also called network credentials, used in conjunction with the communication between the eUICC and OTA platforms. An OTA platform is understood as an Operator platform for remote management of UICCs and the content of Enabled Operator Profiles on eUICCs. Herein, an Operator is understood as a Mobile Network Operator, MNO, or Mobile Virtual Network Operator, MVNO, or generally a company providing wireless cellular network services.

The document [2] [PP], SIM Alliance, eUICC Profile Package: Interoperable Format Technical Specification, Version 2.3, October 2019, defines the contents and formats of elements of a Profile Package used to download a profile to an eUICC. The profile contains its content in form of Profile Elements, PEs. Annex A of [2] shows a template Profile Package showing the mandatory elements of a Profile Package. According to [2] 9.2, a Profile Package contains a profile number, "Integrated Circuit Card Identifier", ICCID. According to [2] 9.5, an USIM Profile Package of GSM type 4G or lower contains an Elementary File EF containing an International Mobile Subscriber Identity, IMSI and an Elementary File, EF containing Keys, or in case of an ISIM or CSIM Profile Package similar Elementary files, EFs. A 5th Generation, 5G, profile contains a Subscription Permanent Identifier, SUPI, containing the IMSI.

Document [1] [SGP.22 V2.2.2], GSMA SGP.22 - SGP.22 RSP Technical Specification, Version 2.2.2, 05 June 2020 (2020-06-05) from the prior art, taking into account mobile networks of the generations up to 4th generation, 4G, discloses a standard set of profile identifiers that comprises or consists of the authentication key Ki and the identifier International Mobile Subscriber Identity IMSI. In mobile networks of the generation 5G, the set of profile identifiers comprises a SUPI as an analogue element to the IMSI, and it is used for entering into and running communication sessions in the mobile network in a concealed form as SUCI.

Document [1] [SGP.22 V2.2.2], particularly chapter 3.1.3 "Profile Download and Installation", is concerned with the process of downloading profiles from a profile server, in document [1] the SM-DP+, to an eUICC.

Document [1] [SGP.22 V2.2.2], particularly chapter 3.1.1 "Profile Download Initiation", is also concerned with the process of ordering a profile by a connectivity service provider CSP, in [1] called the Operator and assumed to be a Mobile Network Operator MNO, at a profile server, in [1] called the SM-DP+.

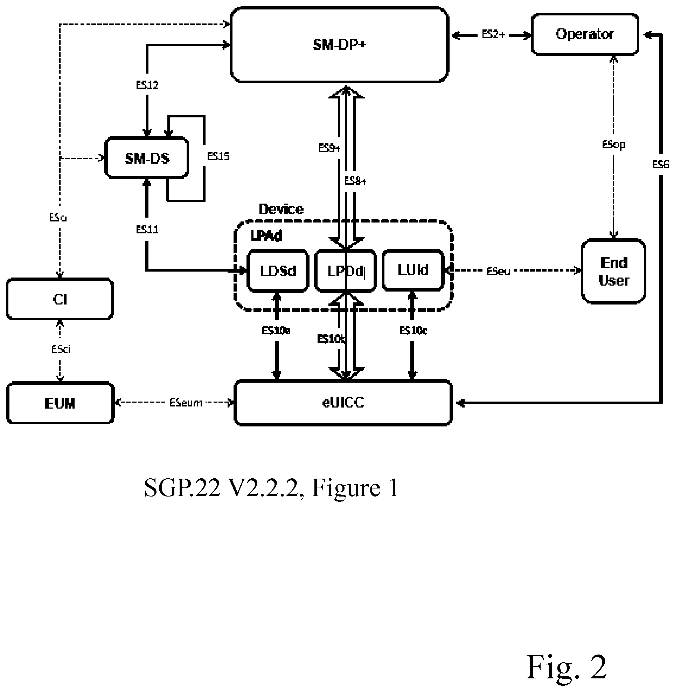

Present Fig. 2 represents Figure 9 from document [1] [SGP.22 V2.2.2], chapter 3.1.1 "Profile Download Initiation". [1] [SGP.22 V2.2.2], Figure 9, and the related text of chapter 3.1.1 describe the procedure of ordering a profile by an Operator at a profile server SM-DP+. In a step (1), the Operator sends to the SM-DP+ a profile download order via a channel ES2+, by a command ES2+.DownloadProfile(EID, Profile Type or ICCID). The profile download command indicates an EID (EID = identifier of the eUICC hardware) of a target eUICC, and either a Profile Type or a distinct profile number ICCID. According to [1], 3.1.1.2, description of step (1), if ICCID is given, the SM-DP+ SHALL verify that this ICCID is available. In case that the Operator orders a profile, giving in the profile download order a distinct ICCID, and the SM-DP+ realizes that the ICCID is assigned to a profile that is already downloaded to some eUICC, then the SM-DP+ rates the ICCID as not available, and doesn't fulfil the profile download order without further measures. The measures to be taken are not further specified in the SGP.22 specification [1] [SGP.22 V2.2.2].

An at least internally know solution to release an ICCID of an already downloaded profile, so as to make it an available ICCID, is to delete the profile from its download location in an eUICC, and to provide a profile delete notification from the eUICC to the SM-DP+. Upon receipt of the profile delete notification, the SM-DP+ releases the ICCID as available, the profile download order referring to the ICCID is approved (provided no other restraints exist), and the profile can be downloaded to the target eUICC indicated in the profile download order. The target eUICC can be the same or a different eUICC as compared to the eUICC where the profile was deleted.

Another known solution to circumvent a linked (locked) ICCID is to order a new profile containing a new identifier IMSI and being assigned a new profile number ICCID. Each IMSI and ICCID of a profile ready to be used in a mobile network have to be registered in the home location register HLR of the MNO hosting the profile. The MNO charges a fee for each IMSI and ICCID registered in its HLR. Therefore, having multiple IMSIs and ICCIDs registered at the MNOs HLR is costly.

Some IMSIs or ICCIDs or IMSI/ICCID pairs in the field are linked (locked) even though they are not used any more. For example, a user may discontinue to use its old device (e.g. lay it away in in a drawer), including the eUICC hosted in the device, and take no further action about the device/eUICC, particularly not delete any profile(s) from the eUICC. In this situation, the IMSI or ICCID or IMSI/ICCID pair(s) of the profile(s) on the eUICC stay linked (locked), in worst case forever.

Another use case is profile users owning several mobile devices might want to use copies of their profiles on their several devices, without having to delete profiles on any of the devices, and without having to make use of several IMSIs and/or ICCIDs. Currently, if a user wants to download the same profile for a second time, however, the same profile credentials for network access are used, and download of the profile for a second time is possible only if the profile server receives a profile delete notification for the already downloaded profile.

### Objective of the invention

It is an object of the present invention to provide a flexible, efficient and secure profile download solution allowing to use or re-use linked (locked) profile numbers, such as ICCIDs.

### Summary of the invention

In greater detail, the object of the invention is achieved by a method with the following features, according to claim 1. Embodiments of the invention are presented in dependent claims.

The method for providing a profile package for download from a profile server to an eUICC hosted in a mobile device comprising the steps at the profile server:
a) receive, from a connectivity service provider server, a profile download order containing a profile type, or a profile number;
b) generate a profile package comprising profile credentials and a profile number assigned considering the received profile type, or the received profile number; the profile credentials are preferably as usual for a profile;
c) provide the generated profile package for download to an eUICC.

The method is characterized by the steps:
a1) identify the received or assigned profile number as linked to a profile already downloaded to an eUICC;
a2) receive, from the connectivity service provider server, a notification that the linked profile number is allowable for release, the allowability for release being due to fulfilling a release criteria; herein, preferably, the connectivity service provider server verifies at its end the release criteria, and notifies the profile server of the result of the verification, namely that the profile number is allowable for release;
herein step a2) comprises following sub-steps:
   a2-1) send a download order response to the connectivity service provider server, informing the connectivity service provider server of the linked profile number, and requesting the connectivity service provider server to release the linked profile number;
   a2-2) receive from the connectivity service provider server a confirm order that the linked profile number is allowable to be released;
   a3) the profile server releases the linked profile number at the profile server;
   a4) the profile server generates network access credentials to be used for downloading the generated profile package to the eUICC.

By the thus achieved method, a linked profile number, when it fulfils release criteria, can be re-used for a new profile download. A linked profile number is a profile number which is occupied since a profile is downloaded to some eUICC using said profile number. Due to the generation of (new) network credentials, an eUICC and background infrastructure that made use of the same profile number in the past to download a profile to an eUICC, have no access to the new profile download process. Thus, even though using the same profile number, confidentiality and security of the profile download is assured, due to the (new) generated network credentials. Since the profile number is released on-the-fly, when it is needed, the method is particularly flexible and efficient.

The release criteria can comprise one or several of the following:
(1) The profile number hasn't been used in any authentication request received at the connectivity service provider server from any mobile device or eUICC for a predetermined time period or longer, where the time period can be e.g. one year, as a non-limiting example. In this case, release of the profile number implies that use of the profile number is discontinued for the profile to which is was linked before the release. The release thus swaps the profile number from an old profile to a new profile, the same number of profiles (e.g. one) being assigned to the profile number before and after the release of the profile number.
(2) The profile number is scheduled to be used for two or more copies of the same profile scheduled to be held available in parallel on two or more different mobile devices or/and on two or more different eUICCs. In This case, the released profile number can continue to be in use also for the profile to which the profile number was linked before the release. The release of the profile number thus effects to add an additional profile to the same profile number.

The network access credentials can comprise one or several of the following: - OTA keys; - NAA parameters; - AKA parameters for MILENAGE or TUAK or a proprietary authentication algorithms. The network access credentials are designed to enable secure and confidential profile download from a profile server to an eUICC via a network.

The network access credentials preferably differ from network access credentials which have been generated for the profile already downloaded to an eUICC.

The connectivity service provider may be either one or several of:
- a Mobile Network Provider, e.g. an MNO;
- a Mobile Virtual Network Provider, e.g. an MVNO.

The profile which is already downloaded to an eUICC may comprise a profile identifier, such as IMSI, wherein the profile package of step b) may comprise the same profile identifier, e.g. IMSI, as the profile which is already downloaded to an eUICC. This embodiment of the invention allows to re-use as well a profile number, such as ICCID, as also the profile identifier, such as IMSI, and is particularly useful when downloading the same profile to a further device of the same user. In other use cases, for example when an expired profile number, e.g. ICCID, shall be re-used, the profile identifier, e.g. IMSI, of the new usage will usually be different from the profile identifier, e.g. IMSI, of the previous usage.

The profile download order of step a) may further contain an eUICC hardware identifier, e.g. EID, of a eUICC to which the profile package shall be downloaded.

A method for downloading a profile to an eUICC comprises the steps:
- provide a profile package on a profile server by a method as described above;
- download the provided profile package from the profile server to the eUICC, herein using the generated network access credentials.

Preferably, the generated network access credentials haven't been used for a profile download before.

A profile server according to the present invention is implemented to perform a method as described above.

### Brief description of the drawings

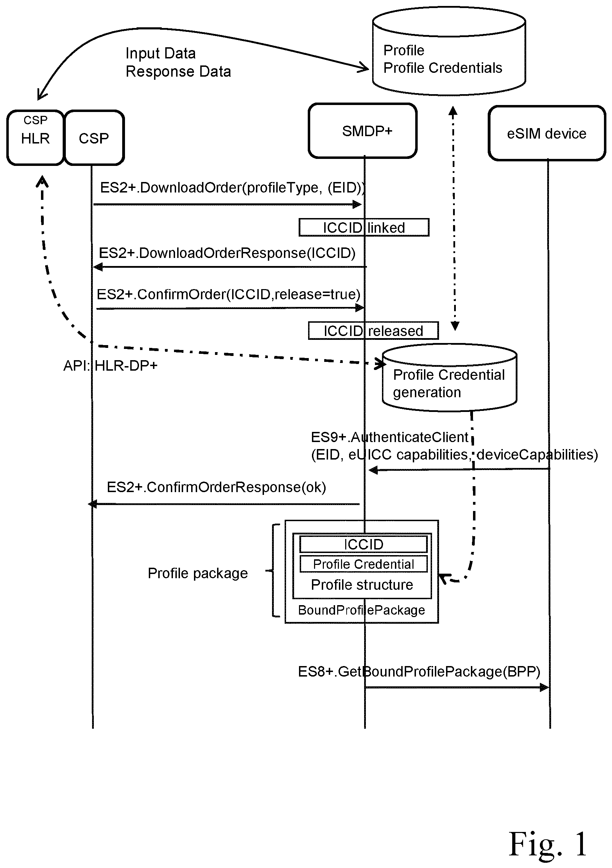

In the following the invention is best understood in view of figure 1 and the associated passages. The remaining embodiments, aspects and examples disclosed below are included for illustrative purpose and for facilitating the understanding of the invention.

Embodiments of the invention will now be described with reference to the accom panying drawings, throughout which like parts are referred to by like references, and in which represents:
- Fig. 1: a diagram depicting profile ordering, including releasing a linked ICCID, according to an embodiment of the invention;
- Fig. 2: a diagram of a Remote SIM Provisioning architecture, according to SGP.22 V2.2.2, Figure 1, suitable for implementation of the invention.

### Detailed description of the invention

Fig. 1 shows a diagram depicting profile ordering and delivery from a profile server SMDP+ to an eUICC hosted in an esim device, herein releasing a linked profile number ICCID, according to an embodiment of the invention.

A connectivity service provider server CSP sends to the profile server SMDP+, over the channel ES2+, a download order for a profile. The download order contains a profile type, and optionally an eUICC hardware identifier, EID, of a eUICC to which the profile package shall be downloaded.

The profile server SMDP+ checks the profile type and assigns to the profile order a profile number ICCID which is compliant with the profile type. In addition, the profile server SMDP+ identifies that the assigned profile number ICCID is not free, but is linked to a profile resident in an eUICC already.

The profile server SMDP+ sends to the connectivity service provider server CSP, over the channel ES2+, a notification that the assigned profile number ICCID is linked to a profile resident in an eUICC.

The connectivity service provider server CSP checks the ICCID, finds it is free for release according to a release criteria, and sends to the profile server SMDP+, over the channel ES2+, a notification that the assigned profile number ICCID is allowable for release.

In reaction to receipt from the connectivity service provider CSP of the notification that the assigned profile number is allowable for release, the profile server SMDP+ releases the profile number ICCID. In addition, the profile server SMDP+ generates network credentials. The generated network credentials are normally different from network credentials that were generated when the ICCID was used previously in connection with the already downloaded profile, for example due to the use of random number generation during generation of the network credentials. It is essential, however, that no already present, and previously used for profile download, network credentials are re-used, but new network credentials are generated.

The profile server SMDP+ generates profile credentials.

Authentication via channel ES9+ between the profile server SMDP+ and the esim device is performed. The connectivity service provider is notified via channel ES2+.

The profile server SMDP+ generates a profile package. The profile package contains the ICCID, the profile structure, the generated profile credentials. The profile server generates a Bound Profile Package from the profile package.

The SMDP+ uses the new generated network credentials to download the Bound Profile Package to the eUICC hosted in the esim device, via channel ES8+.

### Cited prior art documents

[1] [SGP.22 V2.2.2] GSMA SGP.22 - SGP.22 RSP Technical Specification, Version 2.2.2, 05 June 2020 (2020-06-05)
[2] [PP], SIM Alliance, eUICC Profile Package: Interoperable Format Technical Specification, Version 2.3, October 2019

## Claims

1. A method for providing a profile package for download from a profile server (SMDP+) to an eUICC hosted in a mobile device, the method comprising the steps at the profile server (SMDP+):
a) receive, from a connectivity service provider server (CSP), a profile download order containing a profile type, or a profile number (ICCID);
b) generate a profile package comprising profile credentials and a profile number (ICCID) assigned considering the received profile type, or the received profile number (ICCID);
c) provide the generated profile package for download to an eUICC;
**characterized by** the steps:
a1) identify the received or assigned profile number (ICCID) as linked to a profile already downloaded to an eUICC;
a2) receive, from the connectivity service provider server (CSP), a notification that the linked profile number (ICCID) is allowable for release, the allowability for release being due to fulfilling a release criteria; wherein step a2) comprises following sub-steps:
a2-1) send a download order response to the connectivity service provider server (CSP), informing the connectivity service provider server (CSP) of the linked profile number (ICCID) and requesting the connectivity service provider server (CSP) to release the linked profile number (ICCID);
a2-2) receive from the connectivity service provider server (CSP) a confirm order that the linked profile number (ICCID) is allowable to be released;
a3) release the linked profile number (ICCID) at the profile server (SMDP+);
a4) generate network access credentials to be used for downloading the generated profile package to the eUICC.

2. The method according to claim 1,
wherein the release criteria comprises one or several of the following:
- The profile number (ICCID) hasn't been used in any authentication request received at the connectivity service provider server (CSP) from any mobile device or eUICC for a predetermined time period or longer;
- The profile number (ICCID) is scheduled to be used for two or more copies of the same profile scheduled to be held available in parallel on two or more different mobile devices or/and on two or more different eUICCs;.

3. The method according to claim 1 or 2, wherein the network access credentials comprise one or several of the following:
- OTA keys
- NAA parameters
- AKA parameters for MILENAGE or TUAK or a proprietary authentication algorithms.

4. The method according to any of claims 1 to 3, wherein the network access credentials differ from network access credentials which have been generated for the profile already downloaded to an eUICC.

5. The method according to any of claims 1 to 4, wherein the connectivity service provider is either one or several of:
- a Mobile Network Provider (MNO)
- a Mobile Virtual Network Provider (MVNO).

6. The method according to any of claims 1 to 5, wherein the profile which is already downloaded to an eUICC comprises a profile identifier (IMSI), wherein the profile package of step b) comprises the same profile identifier (IMSI) as the profile which is already downloaded to an eUICC.

7. The method according to any of claims 1 to 6, the profile download order of step a) further containing an eUICC hardware identifier (EID) of a eUICC to which the profile package shall be downloaded.

8. A method for downloading a profile from a profile server (SMDP+) to an eUICC, comprising the steps:
- provide a profile package on the profile server (SMDP+) by a method according to any of claims 1 to 7;
- download the provided profile package from the profile server (SMDP+) to the eUICC, herein using the generated network access credentials.

9. The method according to any of claims 1 to 8, wherein the generated network access credentials haven't been used for a profile download.

10. A profile server (SMDP+) implemented to perform a method according to any of claims 1 to 9.

## Patentansprüche

1. Verfahren zum Bereitstellen eines Profilpakets zum Herunterladen von einem Profilserver (SMDP+) auf eine in einem Mobilgerät gehostete eUICC, wobei das Verfahren die folgenden Schritte auf dem Profilserver (SMDP+) umfasst:
a) Empfangen eines Profil-Download-Auftrags, der einen Profiltyp oder eine Profilnummer (ICCID) enthält, von einem Server eines Konnektivitätsdienstanbieters (CSP);
b) Erzeugen eines Profilpakets, das Profil-Anmeldedaten und eine Profilnummer (ICCID) umfasst, die unter Berücksichtigung des empfangenen Profiltyps oder der empfangenen Profilnummer (ICCID) zugewiesen wurde;
c) Bereitstellen des generierten Profilpakets zum Herunterladen auf eine eUICC;
**gekennzeichnet durch** die folgenden Schritte:
a1) Identifizieren der empfangenen oder zugewiesenen Profilnummer (ICCID) als mit einem bereits auf eine eUICC heruntergeladenen Profil verknüpft;
a2) Empfangen einer Benachrichtigung vom Server des Konnektivitätsdienstanbieters (CSP), dass die verknüpfte Profilnummer (ICCID) zur Freigabe zulässig ist, wobei die Zulässigkeit zur Freigabe auf der Erfüllung eines Freigabekriteriums beruht; wobei Schritt a2) folgende Teilschritte umfasst:
a2-1) Senden einer Antwort auf den Download-Befehl an den Server des Konnektivitätsdienstanbieters (CSP), wobei der Server des Konnektivitätsdienstanbieters (CSP) über die verknüpfte Profilnummer (ICCID) informiert und der Server des Konnektivitätsdienstanbieters (CSP) aufgefordert wird, die verknüpfte Profilnummer (ICCID) freizugeben;
a2-2) Empfangen einer Bestätigung vom Server des Konnektivitätsdienstanbieters (CSP), dass die verknüpfte Profilnummer (ICCID) zur Freigabe zulässig ist;
a3) Freigabe der verknüpften Profilnummer (ICCID) auf dem Profilserver (SMDP+);
a4) Erzeugen von Netzwerkzugangsdaten, die zum Herunterladen des erzeugten Profilpakets auf die eUICC verwendet werden sollen.

2. Verfahren nach Anspruch 1,
wobei die Freigabekriterien eines oder mehrere der folgenden Merkmale umfassen:
- Die Profilnummer (ICCID) wurde während eines vorbestimmten Zeitraums oder länger in keiner Authentifizierungsanfrage verwendet, die beim Server des Konnektivitätsdienstanbieters (CSP) von einem Mobilgerät oder einer eUICC eingegangen ist;
- Die Profilnummer (ICCID) ist für zwei oder mehr Kopien desselben Profils vorgesehen, die parallel auf zwei oder mehr verschiedenen Mobilgeräten und/oder auf zwei oder mehr verschiedenen eUICCs verfügbar gehalten werden sollen;

3. Verfahren nach Anspruch 1 oder 2, wobei die Netzwerkzugangsdaten eines oder mehrere der folgenden Elemente umfassen:
- OTA-Schlüssel
- NAA-Parameter
- AKA-Parameter für MILENAGE oder TUAK oder proprietäre Authentifizierungsalgorithmen.

4. Verfahren nach einem der Ansprüche 1 bis 3, wobei sich die Netzwerkzugangsdaten von den Netzwerkzugangsdaten unterscheiden, die für das bereits auf eine eUICC heruntergeladene Profil generiert wurden.

5. Verfahren nach einem der Ansprüche 1 bis 4, wobei der Konnektivitätsdienstanbieter entweder einer oder mehrere der folgenden ist:
- ein Mobilfunknetzbetreiber (MNO)
- ein virtueller Mobilfunknetzbetreiber (MVNO).

6. Verfahren nach einem der Ansprüche 1 bis 5, wobei das bereits auf eine eUICC heruntergeladene Profil eine Profilkennung (IMSI) umfasst, wobei das Profilpaket aus Schritt b) dieselbe Profilkennung (IMSI) umfasst wie das bereits auf eine eUICC heruntergeladene Profil.

7. Verfahren nach einem der Ansprüche 1 bis 6, wobei die Profil-Download-Reihenfolge von Schritt a) ferner eine eUICC-Hardware-Kennung (EID) einer eUICC enthält, auf die das Profilpaket heruntergeladen werden soll.

8. Verfahren zum Herunterladen eines Profils von einem Profilserver (SMDP+) auf eine eUICC, umfassend die folgenden Schritte:
- Bereitstellen eines Profilpakets auf dem Profilserver (SMDP+) durch ein Verfahren gemäß einem der Ansprüche 1 bis 7;
- Herunterladen des bereitgestellten Profilpakets vom Profilserver (SMDP+) auf die eUICC, wobei die generierten Netzwerkzugangsdaten verwendet werden;

9. Verfahren nach einem der Ansprüche 1 bis 8, wobei die generierten Netzwerkzugangsdaten noch nicht für einen Profil-Download verwendet wurden.

10. Ein Profilserver (SMDP+), der zur Durchführung eines Verfahrens gemäß einem der Ansprüche 1 bis 9 implementiert ist.

## Revendications

1. Procédé permettant de fournir un ensemble de profils à télécharger depuis un serveur de profils (SMDP+) vers une eUICC hébergée dans un appareil mobile, le procédé comprenant les étapes suivantes au niveau du serveur de profils (SMDP+) :
a) recevoir, depuis un serveur de fournisseur de services de connectivité (CSP), une commande de téléchargement de profil contenant un type de profil ou un numéro de profil (ICCID) ;
b) générer un paquet de profil comprenant des informations d'identification de profil et un numéro de profil (ICCID) attribué en fonction du type de profil reçu ou du numéro de profil (ICCID) reçu ;
c) fournir le paquet de profil généré pour téléchargement vers une eUICC ;
**caractérisée par** les étapes suivantes :
a1) identifier le numéro de profil (ICCID) reçu ou attribué comme étant lié à un profil déjà téléchargé sur une eUICC ;
a2) recevoir, du serveur du fournisseur de services de connectivité (CSP), une notification indiquant que le numéro de profil associé (ICCID) peut être libéré, cette autorisation de libération étant due au respect d'un critère de libération ; dans lequel l'étape a2) comprend les sous-étapes suivantes :
a2-1) envoyer une réponse à la commande de téléchargement au serveur du fournisseur de services de connectivité (CSP), informant le serveur du fournisseur de services de connectivité (CSP) du numéro de profil associé (ICCID) et demandant au serveur du fournisseur de services de connectivité (CSP) de libérer le numéro de profil associé (ICCID) ;
a2-2) recevoir du serveur du fournisseur de services de connectivité (CSP) une confirmation indiquant que le numéro de profil lié (ICCID) peut être libéré ;
a3) libérer le numéro de profil associé (ICCID) au niveau du serveur de profils (SMDP+) ;
a4) générer des identifiants d'accès au réseau destinés à être utilisés pour télécharger le paquet de profil généré vers l'eUICC.

2. Procédé selon la revendication 1,
dans lequel les critères de libération comprennent un ou plusieurs des éléments suivants:
- Le numéro de profil (ICCID) n'a pas été utilisé dans une quelconque demande d'authentification reçue au niveau du serveur du fournisseur de services de connectivité (CSP) provenant d'un quelconque appareil mobile ou d'une eUICC pendant une période prédéterminée ou plus ;
- Le numéro de profil (ICCID) est prévu pour être utilisé pour deux ou plusieurs copies du même profil devant être maintenues disponibles en parallèle sur deux ou plusieurs appareils mobiles différents et/ou sur deux ou plusieurs eUICC différentes ;

3. Procédé selon la revendication 1 ou 2, dans lequel les identifiants d'accès au réseau comprennent un ou plusieurs des éléments suivants :
- des clés OTA
- Paramètres NAA
- des paramètres AKA pour MILENAGE ou TUAK ou des algorithmes d'authentification propriétaires.

4. Procédé selon l'une quelconque des revendications 1 à 3, dans lequel les identifiants d'accès au réseau diffèrent des identifiants d'accès au réseau qui ont été générés pour le profil déjà téléchargé sur une eUICC.

5. Procédé selon l'une quelconque des revendications 1 à 4, dans lequel le fournisseur de services de connectivité est l'un ou plusieurs des suivants :
- un opérateur de réseau mobile (MNO)
- un opérateur de réseau mobile virtuel (MVNO).

6. Procédé selon l'une quelconque des revendications 1 à 5, dans lequel le profil déjà téléchargé sur une eUICC comprend un identifiant de profil (IMSI), le paquet de profil de l'étape b) comprenant le même identifiant de profil (IMSI) que le profil déjà téléchargé sur une eUICC.

7. Procédé selon l'une quelconque des revendications 1 à 6, l'ordre de téléchargement de profil de l'étape a) contenant en outre un identifiant matériel eUICC (EID) d'une eUICC sur laquelle le paquet de profil doit être téléchargé.

8. Procédé de téléchargement d'un profil depuis un serveur de profils (SMDP+) vers une eUICC, comprenant les étapes suivantes :
- fournir un paquet de profil sur le serveur de profils (SMDP+) par un procédé selon l'une quelconque des revendications 1 à 7 ;
- télécharger le paquet de profil fourni depuis le serveur de profils (SMDP+) vers l'eUICC, en utilisant ici les identifiants d'accès au réseau générés.

9. Procédé selon l'une quelconque des revendications 1 à 8, dans lequel les identifiants d'accès au réseau générés n'ont pas été utilisés pour un téléchargement de profil.

10. Serveur de profils (SMDP+) mis en ceuvre pour exécuter un procédé selon l'une quelconque des revendications 1 à 9.
